Europäisches Patentamt

European Patent Office

Office européen des brevets

(11) Numéro de publication: **0 369 837 B1**

# (12) FASCICULE DE BREVET EUROPEEN

(45) Date de publication de fascicule du brevet: **05.01.94** (51) Int. Cl.⁵: **G02C 7/02**

(21) Numéro de dépôt: **89402878.6**

(22) Date de dépôt: **18.10.89**

(54) **Verre de lunettes de puissance positive et de grand diamètre.**

(30) Priorité: **20.10.88 FR 8813772**

(43) Date de publication de la demande:
**23.05.90 Bulletin 90/21**

(45) Mention de la délivrance du brevet:
**05.01.94 Bulletin 94/01**

(84) Etats contractants désignés:
**BE DE ES GB IT**

(56) Documents cités:
| | |
|---|---|
| EP-A- 0 149 100 | EP-A- 0 201 231 |
| WO-A-86/02462 | DE-B- 2 749 144 |
| GB-A- 2 132 785 | GB-A- 2 139 375 |

(73) Titulaire: **ESSILOR INTERNATIONAL, Cie Générale d'Optique
1 Rue Thomas Edison,
Echat 902
F-94028 Créteil Cédex(FR)**

(72) Inventeur: **Cornu, Daniel/ 53 Rue François Bouché
No 17 Résidence de la Grande Prairie
F-91330 Yerres(FR)**
Inventeur: **Harsigny, Christian
8 Rue René Brun
F-91330 Yerres(FR)**
Inventeur: **Thiebaut, Jean
73 Rue de l'Eglise
F-75015 Paris(FR)**

(74) Mandataire: **CABINET BONNET-THIRION
95 Boulevard Beaumarchais
F-75003 Paris (FR)**

## Description

La présente invention concerne d'une manière générale les verres de lunettes de puissance positive, et elle vise plus particulièrement ceux de ces verres de lunettes dont la puissance reste relativement modérée, en étant par exemple de l'ordre de deux à neuf dioptries.

D'une manière générale, un verre de lunettes de puissance positive doit satisfaire à plusieurs exigences.

La première, et la principale, est qu'il doit comporter une zone centrale optiquement utile aussi grande que possible, étant entendu que l'on entend ici, de manière usuelle, par zone optiquement utile, une zone suffisamment bien corrigée des aberrations d'astigmatisme et courbure de champ pour permettre aux intéressés une vision satisfaisante.

Cette zone optiquement utile couvre généralement la totalité du verre de lunettes, son diamètre de valeur limitée et constante, quelle que soit la puissance du verre de lunettes, étant alors égal à celui du contour géométrique de celui-ci.

Dans le cas d'un verre de lunettes de forte puissance positive, il est prévu, autour de cette zone optiquement utile, entre celle-ci et le contour géométrique du verre de lunettes, une zone périphérique de raccordement.

Il est nécessaire, en effet, et il s'agit là d'une deuxième exigence, que, pour des raisons, notamment, de résistance mécanique et de possibilité de montage dans une monture, l'épaisseur au bord du verre de lunettes ait une valeur donnée.

Mais, et il s'agit là d'une troisième exigence tout aussi importante que les précédentes, il est souhaitable que, pour le confort des intéressés, et, notamment, pour que, dans son ensemble, le verre de lunettes ait un poids minimal, l'épaisseur au centre de ce verre de lunettes soit aussi réduite que possible.

A ces exigences, classiques, qui relèvent de la géométrie même du verre de lunettes et de ses caractéristiques optiques, s'ajoute, usuellement, une exigence industrielle tenant au fait que, pour de simples raisons économiques, il est souhaitable que le verre de lunettes puisse être facile à fabriquer directement par simple moulage d'une quelconque matière synthétique appropriée telle que, par exemple, le carbonate d'allyle diglycol.

Mais, actuellement, pour satisfaire à une demande des usagers, il est souhaitable que, conjointement, pour montage dans de grandes montures, c'est-à-dire dans des montures équipées de cercles ou entourages de grande ouverture, le diamètre du contour géométrique du verre de lunettes soit aussi grand que possible.

De fait, pour l'équipement de certaines montures, il est nécessaire, actuellement, de disposer de verres de lunettes de diamètre supérieur à 70 mm.

Mais cette exigence est contradictoire avec les précédentes, ou, tout au moins, avec celles relatives à la géométrie du verre de lunettes et à ses caractéristiques optiques, même pour des puissances modérées.

De fait, il n'est pas possible, à ce jour, d'équiper de grandes montures de verres de lunettes de puissance positive modérée.

Il en est ainsi tant pour les verres de lunettes dont l'une et l'autre des faces sont sphériques que pour ceux dont l'une au moins de ces faces est asphérique.

Ainsi, il y a actuellement, sur le marché, un certain besoin en verres de lunettes de puissance positive qui soient à la fois de grand diamètre, bien corrigés, et relativement légers.

La présente invention est fondée sur la découverte jusqu'ici non mise en évidence, que, en respectant une certaine relation entre le diamètre de la zone optiquement utile du verre de lunettes et sa puissance, il est possible d'aboutir à un compromis permettant de satisfaire globalement à l'ensemble des exigences à respecter, et permettant, donc, de répondre au besoin, en l'espèce, du marché.

La présente invention a ainsi pour objet un verre de lunettes de puissance positive, qui est du genre comportant une zone centrale optiquement utile de diamètre $D_1$ inférieur au diamètre $D_2$ de son contour géométrique, avec, autour de cette zone optiquement utile, entre celle-ci et ledit contour géométrique, une zone périphérique de raccordement tangentiel, et qui est d'une manière générale caractérisé en ce que le diamètre $D_1$ de sa zone optiquement utile, exprimé en millimètres, est globalement lié à sa puissance P, exprimée en dioptries, par une relation générale du type de la suivante :

$$D_1 = a - b\,P$$

dans laquelle $\underline{a}$ est un paramètre numérique compris entre 84 et 89 et $\underline{b}$ un paramètre numérique compris entre 4 et 4,9, et en ce que le diamètre de son contour géométrique est supérieur à 70 mm.

L'expérience montre en effet que, comme recherché, il est possible, en respectant cette relation, d'obtenir un verre de lunettes de puissance positive à la fois bien corrigé dans sa zone optiquement utile, de grande taille, avec en pratique un contour géométrique de diamètre largement supérieur à 70 mm, et relativement léger.

Les caractéristiques et avantages de l'invention ressortiront d'ailleurs de la description qui va suivre, à titre d'exemple, en référence aux dessins schématiques annexés sur lesquels :

la figure 1 est une vue en coupe axiale d'un verre de lunettes suivant l'invention ;

la figure 2 reprend, à échelle supérieure, le détail de ce verre de lunettes repéré par un encart II sur la figure 1 ;

la figure 3 est un diagramme représentatif de la relation à laquelle il satisfait.

De manière générale, et tel qu'illustré sur ces figures, le verre de lunettes suivant l'invention, qui est un verre de lunettes de puissance positive P comprise entre deux et neuf dioptries, est du genre comportant une zone centrale optiquement utile 10, de diamètre $D_1$ au plus égal au diamètre $D_2$ de son contour géométrique 11, avec, autour de cette zone optiquement utile 10, entre celle-ci et ledit contour géométrique 11, une zone périphérique de raccordement tangentiel 12.

Suivant l'invention, le diamètre $D_1$ de la zone optiquement utile 10, exprimé en millimètres, est globalement lié à la puissance P, exprimée en dioptries, par une relation générale du type de la suivante :

$$D_1 = a - b\,P$$

dans laquelle $\underline{a}$ est un paramètre numérique compris entre 84 et 89 et $\underline{b}$ un paramètre numérique compris entre 4 et 4,9, et le diamètre $D_2$ du contour géométrique 11 est supérieur à 70 mm.

Des résultats particulièrement satisfaisants sont obtenus lorsque $\underline{a}$ est égal à 86,5 et $\underline{b}$ à 4,4.

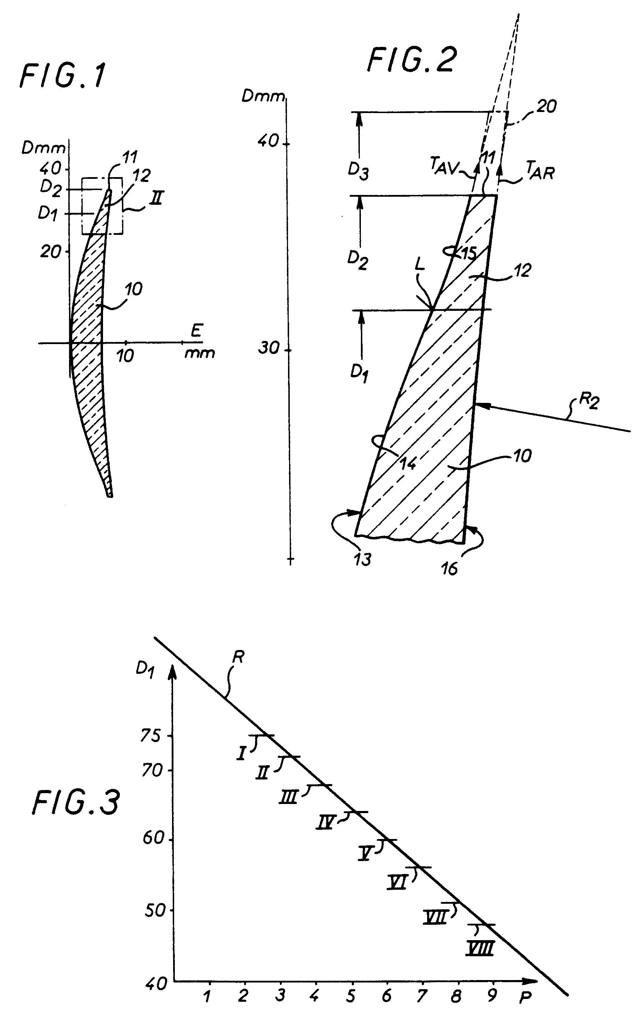

Sur le diagramme de la figure 3, sur lequel ont été portés en abscisses la puissance P et en ordonnées le diamètre $D_1$, la droite R est représentative de la relation suivant l'invention.

En pratique, la face avant 13 du verre de lunettes suivant l'invention, qui est formée de la surface avant 14 de sa zone optiquement utile 10 et de la surface avant 15 de sa zone de raccordement tangentiel 12, est de révolution, autour de l'axe optique et géométrique de l'ensemble, et il en est de même de sa face arrière 16.

En pratique, également, la surface avant 14 de la zone optiquement utile 10 est asphérique.

Il a été trouvé que de bons résultats sont obtenus lorsque cette surface asphérique répond à la relation, cartésienne, suivante :

$$X = \frac{Y^2/R^1}{1 + \sqrt{1 - (K + 1)\,Y^2/R_1^2}} + AY^4 + BY^6 + CY^8 + DY^{10}$$

dans laquelle :

$R_1$ est le rayon de la surface sphérique de base, exprimé en millimètres,

et K, A, B, C et D sont des coefficients numériques.

Il est en effet ainsi possible, pour la correction des aberrations de la zone optiquement utile 10, de satisfaire relativement aisément au programme d'optimisation permettant l'introduction de toutes les fonctions de mérite souhaitées.

De préférence, la surface avant 15 de la zone de raccordement 12 est, conjointement, une surface parabolique concave se raccordant tangentiellement, suivant une circonférence L de diamètre $D_1$, à la surface avant 14 de la zone optiquement utile 10.

Sur la coupe axiale des figures 1 et 2, la circonférence L correspond donc à un point d'inflexion pour la courbe correspondante.

Des résultats satisfaisants sont obtenus lorsque cette surface parabolique répond aux relations, paramétriques, suivantes :

$$X = E.U^2 + F.U + G$$
$$Y = H.U^2 + I.U + J$$

dans laquelle E, F, G, H, I et J sont des coefficients numériques.

3

Dans la forme de réalisation représentée, la face arrière 16 du verre de lunettes suivant l'invention est par ailleurs formée par une surface sphérique de rayon $R_2$.

Mais d'autres surfaces, et par exemple une surface torique, peuvent également convenir.

On donnera ci-après, à titre non limitatif, dans les tableaux T1, T2, un certain nombre d'exemples numériques de verres de lunettes suivant l'invention.

Dans le tableau T1 sont rassemblés les coefficients numériques de la surface avant asphérique 14 de la zone optiquement utile 10 de ces verres de lunettes, les caractéristiques de puissance de ceux-ci et leurs caractéristiques géométriques, avec, en particulier, exprimée en millimètres, leur épaisseur au centre E.

Dans le tableau T2 sont rassemblés les coefficients numériques relatifs à la surface avant 15 de la zone de raccordement tangentiel 12 de ces verres de lunettes.

L'exemple IV correspond à la forme de réalisation représentée sur les figures 1 et 2.

Mais on notera que, dans tous les cas, le diamètre $D_2$ du contour géométrique 11 du verre de lunettes suivant l'invention est largement supérieur à 70 mm, puisqu'il est égal à 75 mm.

EP 0 369 837 B1

T1

| EXEMPLES | P | $R_1$ mm | K | A | B | C | D | $R_2$ mm | E mm | D mm | D' mm |
|---|---|---|---|---|---|---|---|---|---|---|---|
| I | | | | | | | | | | | |
| II | 3,25 | 92,833 | − 0,995875 | − 1,95845.$10^{-7}$ | 5,54237.$10^{-13}$ | − 7,61801.$10^{-16}$ | 1,09606.$10^{-19}$ | 223,4646 | 5,15 | 75 | 72 |
| III | 4,25 | 82,519 | − 0,8784 | − 2,25472.$10^{-7}$ | 1,38271.$10^{-12}$ | − 7,4423.$10^{-16}$ | 4,23937.$10^{-20}$ | 253,8717 | 6,38 | 75 | 68 |
| IV | 5,25 | 74,267 | − 0,852831 | − 2,27437.$10^{-7}$ | 1,95523.$10^{-12}$ | − 8,0536.$10^{-16}$ | 9,06195.$10^{-21}$ | 291,922 | 7,37 | 75 | 64 |
| V | 6 | 67,515 | − 0,0564296 | − 3,4264.$10^{-7}$ | − 2,71822.$10^{-10}$ | 3,0696.$10^{-14}$ | − 6,48049.$10^{-17}$ | 293,9796 | 7,76 | 75 | 60 |
| VI | 7 | 61,889 | − 0,0428316 | − 4,15961.$10^{-7}$ | − 3,71077.$10^{-10}$ | 2,15966.$10^{-14}$ | − 9,28458.$10^{-17}$ | 344,9656 | 8,14 | 75 | 56 |
| VII | 7,75 | 57,128 | − 0,031715 | − 4,77966.$10^{-7}$ | − 4,64813.$10^{-10}$ | 8,91197.$10^{-15}$ | − 1,2503.$10^{-16}$ | 344,4323 | 8,37 | 75 | 52 |
| VIII | 8,75 | 53,048 | − 0,0245499 | − 5,43749.$10^{-7}$ | − 5,74955.$10^{-10}$ | − 1,6195.$10^{-14}$ | 1,72369.$10^{-16}$ | 416,672 | 8,39 | 75 | 48 |

| T2 | | | | | | |
|---|---|---|---|---|---|---|
| EXEMPLES | E | F | G | H | I | J |
| I | | | | | | |
| II | -0,309483 | 1.905399 | 6.651873 | 0,0745926 | 5,425408 | 36 |
| III | -0,539987 | 2,815268 | 6,740563 | 0,110618 | 7,389382 | 34 |
| IV | -0,81152 | 3,673589 | 6,704529 | 0,479576 | 9,020424 | 32 |
| V | -1,361213 | 4,793299 | 6,51459 | -0,231704 | 11,73171 | 30 |
| VI | -1,861118 | 5,546417 | 6,225033 | 0,363235 | 13,13677 | 28 |
| VII | -2,3907 | 6,688336 | 5,869499 | 0,1619757 | 15,33802 | 26 |
| VIII | -3,17827 | 7,534674 | 5,428029 | 0,4928589 | 17,00714 | 24 |

Ainsi qu'on le notera, dans les tableaux T1, T2 ci-dessus, la puissance P varie, de manière usuelle, par paliers.

Sur le diagramme de la figure 3, on a reporté les paliers correspondants.

La droite R recoupe sensiblement ces divers paliers.

Autrement dit, elle en matérialise la ligne médiane.

Les exemples donnés dans les tableaux T1, T2 correspondent par ailleurs à des verres de lunettes dont le matériau constitutif a un indice de réfraction N égal à 1,5.

C'est l'indice de réfraction du carbonate d'allyle diglycol, et, de fait, les verres de lunettes suivant l'invention sont préférentiellement moulés en un tel matériau.

Mais il va de soi qu'un matériau d'indice de réfraction différent, et par exemple d'indice de réfraction supérieur, en particulier d'indice de réfraction égal à 1,56, peut être mis en oeuvre.

Dans un tel cas, il peut être utilisé, pour la face avant des verres de lunettes, les mêmes moules que ceux correspondant à la face avant des verres de lunettes dont le matériau constitutif a un indice de réfraction égal à 1,5, seuls devant être différents les moules correspondant à leur face arrière.

Il en résulte alors simplement un décalage vers le haut de la gamme de puissances.

Dans ce qui précède, le contour géométrique 11 est celui du verre de lunettes suivant l'invention après son détourage consécutif à son moulage.

Tel que schématisé en traits interrompus à la figure 2, et de manière usuelle, le moulage de ce verre de lunettes se fait en effet avec une zone annulaire 20 supplémentaire, de diamètre $D_3$, propre à l'appui du joint d'étanchéité mis en oeuvre pour le moulage.

De préférence, pour que les deux moules correspondants s'appuient alors en cet endroit sur ce joint d'étanchéité, il est fait en sorte que, tel que représenté, les tangentes $T_{AV}$ et $T_{AR}$ aux faces avant 13 et arrière 16 du verre de lunettes le long de son contour géométrique 11 se recoupent radialement au-delà de ce contour géométrique 11.

Les exemples numériques donnés dans les tableaux T1, T2 satisfont avantageusement à cette exigence.

Bien entendu, la présente invention ne se limite cependant pas à ces exemples numériques, mais s'étend à toute variante d'exécution.

**Revendications**

1. Verre de lunettes de puissance positive, du genre comportant une zone centrale optiquement utile de diamètre inférieur au diamètre de son contour géométrique, avec, autour de cette zone optiquement utile, entre celle-ci et ledit contour géométrique, une zone périphérique de raccordement tangentiel, caractérisé en ce que le diamètre $D_1$ de sa zone optiquement utile (10) exprimé en millimètres, est globalement lié à sa puissance P, exprimée en dioptries, par une relation générale du type de la suivante :

$$D_1 = a - b\, P$$

dans laquelle $\underline{a}$ est un paramètre numérique compris entre 84 et 89 et $\underline{b}$ un paramètre numérique compris entre 4 et 4,9, et en ce que le diamètre $D_2$ de son contour géométrique (11) est supérieur à 70

6

mm.

2. Verre de lunettes suivant la revendication 1, caractérisé en ce que a est égal à 86,5 et b à 4,4.

3. Verre de lunettes suivant l'une quelconque des revendications 1, 2, caractérisé en ce que la surface avant de sa zone optiquement utile (10) est asphérique.

4. Verre de lunettes suivant l'une quelconque des revendications 1 à 3, caractérisé en ce que la surface avant de sa zone de raccordement (12) est une surface parabolique concave.

5. Verre de lunettes suivant l'une quelconque des revendications 1 à 4, caractérisé en ce que les tangentes ($T_{AV}$, $T_{AR}$) à ses faces avant (13) et arrière (16) le long de son contour géométrique (11) se recoupent radialement au-delà de ce contour géométrique (11).

**Claims**

1. A positive-power spectacle lens of the kind comprising a central optically useful zone of smaller diameter than the diameter of its geometrical contour, with, around said optically useful zone, between same and said geometrical contour, a peripheral tangential-connection zone, characterised in that the diameter $D_1$ of its optically useful zone (10) expressed in millimetres is overall linked to its power P expressed in dioptres by a general relationship of the following type:

$$D_1 = a - b p$$

in which a is a numerical parameter of between 84 and 89 and b is a numerical parameter of between 4 and 4.9, and that the diameter $D_2$ of its geometrical contour (11) is greater than 70 mm.

2. A spectacle lens according to claim 1 characterised in that a is equal to 86.5 and b is equal to 4.4.

3. A spectacle lens according to either one of claims 1 and 2 characterised in that the front surface of its optically useful zone (10) is aspherical.

4. A spectacle lens according to any one of claims 1 to 3 characterised in that the front surface of its connection zone (12) is a concave parabolic surface.

5. A spectacle lens according to any one of claims 1 to 4 characterised in that the tangents ($T_{AV}$, $T_{AR}$) to its front face (13) and rear face (16) along its geometrical contour (11) intersect radially beyond said geometrical contour (11).

**Patentansprüche**

1. Brillenglas von positiver Brechkraft, mit einer optisch wirksamen Mittelzone von einem Durchmesser, der kleiner ist als der Durchmesser seiner geometrischen Kontur, wobei sich um diese optisch wirksame Zone herum zwischen dieser und der geometrischen Kontur eine Randzone von tangentialer Verbindung befindet, dadurch gekennzeichnet, daß der Durchmesser $D_1$ der optisch wirksamen Zone (10), ausgedrückt in Millimetern, im ganzen verknüpft ist mit ihrer Brechkraft P, ausgedrückt in Dioptrien, durch eine allgemeine Beziehung von folgendem Typ:

$$D_1 = a - b P$$

wobei a ein numerischer Parameter ist, der zwischen 84 und 89 liegt, und b ein numerischer Parameter ist, der zwischen 4 und 4,9 liegt, und daß der Durchmesser $D_2$ der geometrischen Kontur (11) größer als 70 mm ist.

2. Brillenglas nach Anspruch 1, dadurch gekennzeichnet, daß a gleich 86,5 und b gleich 4,4 ist.

3. Brillenglas nach einem der Ansprüche 1 , 2, dadurch gekennzeichnet, daß die Vorderfläche der optisch wirksamen Zone (10) asphärisch ist.

4.  Brillenglas nach einem der Ansprüche 1 bis 3, <u>dadurch gekennzeichnet,</u> daß die Vorderfläche der Verbindungszone (12) eine parabolisch konkave Oberfläche ist.

5.  Brillenglas nach einem der Ansprüche 1 bis 4, <u>dadurch gekennzeichnet,</u> daß die Tangenten ($T_{AV}$, $T_{AR}$) an seinen Vorderflächen (13) und Hinterflächen (16) längs seiner geometrischen Kontur (11) sich radial jenseits der geometrischen Kontur (11) schneiden.

8

FIG.1

FIG.2

FIG.3